# EUROPEAN PATENT APPLICATION

(11) **EP 4 708 428 A1**
(43) Date of publication of application: **11.03.2026**
(21) Application number: 25195414.5
(22) Date of filing: 12.08.2025
(51) Int. Cl.: H01M 10/052, H01M 50/172, H01M 50/534, H01M 50/571

(54) **LEAD TAB WITH IMPROVED ADHESION**

(30) Priority: 26.08.2024 KR 20240114647
(71) Applicant: Flexion Co., Ltd, Jeongeup-si, Jeollabuk-do 56137 (KR)
(72) Inventor: YU, Jinha, 56137 Jeongeup-si (KR); NOH, Hyeongwan, 56137 Jeongeup-si (KR); CHOI, Sunghoon, 56137 Jeongeup-si (KR)
(74) Representative: Ter Meer Steinmeister & Partner

(57) **Abstract**

The present invention provides a lead tab including a metal substrate including aluminum and a metal layer laminated on both sides of the metal substrate, wherein the metal layer includes 70 to 99.9 wt% of chromium, wherein the lead tab has a gloss of 60 to 100 (Gs 60°), and has a water contact angle of 60 to 80°.

## Description

### LEAD TAB WITH IMPROVED ADHESION

The application claims priority of KR Patent Appl. No.10-2024-0114647 filed Aug. 26, 2024.

### BACKGROUND

### Field of the Invention

The present invention relates to a lead tab with improved adhesion.

### Discussion of the Related Art

The secondary battery industry is in the spotlight as a core component of IT devices along with semiconductors and displays. Recently, its use is increasing for electric bicycles, hybrid vehicles (HEVs), electric vehicles (EVs), plug-in hybrid vehicles (PHEVs), and energy storage systems (ESS) that use large-capacity batteries.

Typical secondary battery has a lead tab provided to extract electricity to the outside. In a secondary battery, one end of the lead tab is connected to the battery element and is pressed against the opposing film, and the other end protrudes to the outside of the film.

In secondary batteries, surface treatment of the lead tab is necessary to facilitate adhesion between the lead tab and the insulating film and to prevent defects such as corrosion or peeling due to stimulation inside and outside the battery in an actual use environment after adhesion.

Meanwhile, the material used in the conventional surface treatment technology was hexavalent chromium. However, surface treatment methods using hexavalent chromium are currently being regulated or used in a limited manner worldwide due to human hazards and environmental issues.

To solve these problems, research is continuously being conducted on lead tabs with improved adhesion.

### SUMMARY

The present invention relates to a lead tab with improved adhesion that can prevent problems caused by the limitations and disadvantages of the above-mentioned related technologies.

One embodiment of the present invention provides a lead tab including a metal substrate including aluminum and a metal layer laminated on both sides of the metal substrate, wherein the metal layer includes 70 to 99.9 wt% of chromium, wherein the lead tab has a gloss of 60 to 100 (Gs 60°), and has a water contact angle of 60 to 80°.

In one or more embodiments, the lead tab may have an arithmetic mean roughness (Ra) of 0.06 to 0.15 µm, a maximum height roughness (Ry) of 0.5 to 1.0 µm, and a 10-point average roughness (Rz) of 0.4 to 0.7 µm.

In one or more embodiments, the lead tab may have a surface energy of 41 dyne/cm or more.

In one or more embodiments, the lead tab may have L of 60 to 75, a of -1 or less, and b of -1 or less based on a Lab colorimetric system.

In one or more embodiments, the metal substrate may have a thickness of 100 to 1,000 µm.

In one or more embodiments, the metal layer may have a thickness of 10 to 500 nm.

In one or more embodiments, the metal layer may be formed by a dry vacuum process.

In one or more embodiments, the dry vacuum process may comprise at least one of a sputtering process, an evaporation process, an ion plating process, and a CVD process.

In one or more embodiments, a secondary battery is provided comprising the lead tab of any one of the embodiments mentioned above.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view of a secondary battery of one embodiment of the present invention.
FIG. 2 is a cross-sectional view of a lead tab of one embodiment of the present invention.
FIG 3 is a cross-sectional view taken along line I-I' of FIG 1.
FIG. 4 is a conceptual diagram schematically illustrating part of a sputtering device.

### DETAILED DESCRIPTION OF THE disclosure

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Accordingly, a first component described below may be a second component within the technical concept of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

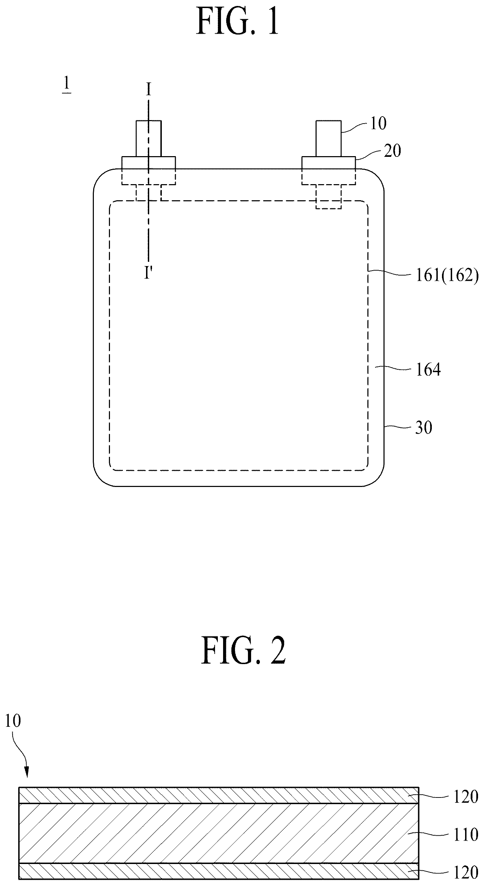

FIG. 1 is a perspective view of a secondary battery 1 according to one embodiment of the present invention.

FIG. 2 is a cross-sectional view of a lead tab 10 according to one embodiment of the present invention.

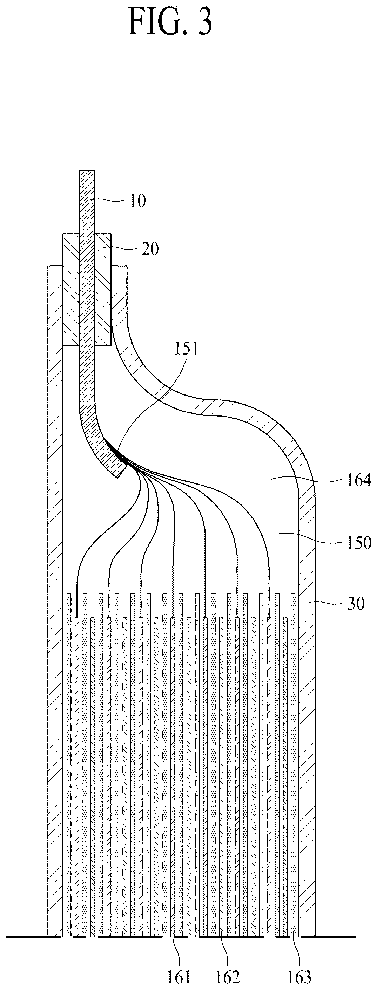

FIG 3 is a cross-sectional view taken along line I-I' of FIG 1.

There is no particular limitation on the type of secondary battery 1 according to one embodiment of the present invention, but it may preferably be a lithium secondary battery.

Referring to FIGS. 1 and 3, a secondary battery 1 according to one embodiment of the present invention is configured such that a film-shaped negative electrode 161 and a film-shaped positive electrode 162 are disposed in a state of being overlapped with each other via a separator 163, and an electrolyte 164 is disposed between the negative electrode 161 and the positive electrode 162 so as to enable charging and discharging by the transfer of lithium ions. The secondary battery 1 including the negative electrode 161, the positive electrode 162, and the electrolyte 164 is covered in a liquid-tight state by an outer case 30. Specifically, the negative electrode 161, the positive electrode 162, and the electrolyte 164 are sealed inside the outer case 30 to protect them from the outside. In addition, the negative electrode 161 is formed as a structure in which a secondary battery copper foil is used as an negative electrode collector and a negative electrode active material slurry is coated thereon. Likewise, the positive electrode 162 is formed with a structure in which a positive electrode active material slurry is coated on a positive electrode current collector such as aluminum.

In addition, although not shown in the drawing, the lead tab 10 may be composed of a negative lead tab and a positive lead tab. More specifically, the lead tab 10 disposed on the left side of Fig. 1 may be a positive lead tab, and the lead tab 10 disposed on the right side may be a negative lead tab.

Referring to Fig. 1, a sealing tape 20 is disposed on one side of the outer case 30 of the secondary battery 1. The sealing tape 20 is intended to further improve the adhesiveness between the lead tab 10 and the outer case 30. The sealing tape 20 is disposed on the lead tab 10, and a portion of the sealing tape 20 is in close contact with the inner surface of the outer case 30 to seal the outer case 30. The sealing tape 20 has a function of preventing leakage of a liquid such as an electrolyte 164 sealed inside the outer case 30. In addition, the sealing tape 20 is disposed between the lead tab 10 and the outer case 30 to secure insulation between the lead tab 10 and the outer case 30. A polypropylene film is used as the sealing tape 20. However, one embodiment of the present invention is not limited thereto, and may be formed of a polymer-based composite.

Referring to Fig. 1, one end of the lead tab 10 is connected to one of the positive electrode 161 and the negative electrode 162, and the other end of the lead tab 10 is exposed to the outside of the outer body 30.

As illustrated in FIG. 2, the lead tab 10 of the present invention includes a metal substrate 110 including aluminum Al and a metal layer 120 on the metal substrate 110. The metal substrate 110 and the metal layer 120 are described in detail below.

Referring to FIG. 3, a plurality of electrode tabs 150 protruding from a negative electrode 161 are integrally combined to form a pre-welding portion 151, and a lead tab 10 is electrically connected to the upper portion of the pre-welding portion 151 by welding.

For example, in the case of ultrasonic welding as a welding method, when ultrasonic vibration is applied, frictional heat causes plastic deformation, allowing the lead tab 10 to penetrate and closely adhere to the pre-welding portion 151, which is formed by integrally bonding the electrode tabs 150.

The material of the metal substrate 110 is not particularly limited, but may be formed of aluminum or copper. According to one embodiment of the present invention, the metal substrate 110 may be formed of aluminum.

According to one embodiment of the present invention, the metal substrate 110 may have a thickness of 100 to 1,000 µm. Preferably, it may have a thickness of 100 to 500 µm.

According to one embodiment of the present invention, the lead tab 10 may further include a metal layer 120 on the metal substrate 110.

The metal layer 120 contains 70.0 to 99.9 wt%(w/w) chromium Cr.

Specifically, the metal layer 120 can be formed by a dry vacuum process. For example, the metal layer 120 can be formed by any one of a sputtering process, an evaporation process, an ion plating process, and a CVD process as examples of the dry vacuum process. Preferably, the metal layer 120 can be formed by a sputtering process.

In general, the lead tab further includes a protective layer containing a chromium compound to improve corrosion resistance. At this time, the protective layer is formed through chromate treatment. However, the protective layer formed by the chromate treatment may have a very high oxygen fraction in the protective layer. At this time, the oxygen fraction means the ratio of oxygen to the total number of atoms in the protective layer. A protective layer with a very high oxygen fraction may cause the metal layer in contact with the protective layer to be excessively oxidized, thereby reducing the adhesion between the lead tab and the insulating film.

In addition, in the case of a protective layer formed by chromate treatment, some trivalent chromium Cr3+ or hexavalent chromium Cr6+ may exist within the protective layer. At this time, the hexavalent chromium Cr6+ existing within the protective layer may have a strong oxidizing power. As a result, the metal layer in contact with the protective layer may be excessively oxidized, which may reduce the adhesion between the lead tab and the insulating film.

Therefore, according to one embodiment of the present invention, in order to increase the adhesion between the lead tab 10 and the sealing tape 20, the metal layer 120 needs to contain 70 to 99.9 wt% of chromium Cr.

According to one embodiment of the present invention, when the metal layer 120 is deposited by a sputtering process and contains 70 to 99.9 wt% of chromium Cr, the oxygen fraction in the metal layer 120 is sufficiently reduced to achieve the purpose, thereby increasing the adhesion between the lead tab 10 and the sealing tape 20. As a result, defects such as corrosion or peeling due to stimulation inside and outside the battery may not occur in an actual use environment.

In addition, according to one embodiment of the present invention, when the metal layer 120 is deposited by a sputtering process and contains 70 to 99.9 wt% of chromium Cr, hexavalent chromium Cr6+ in the metal layer 120 can reduce the impact of harmful substances on human health and the environment, thereby suppressing the occurrence of harmful substances.

The lead tab 10 according to one embodiment of the present invention can have a gloss of 60 to 100 (Gs 60°). The gloss (Gs 60°) according to one embodiment of the present invention is measured using a Gloss Meter (VG8000 product of Nippon Denshoku Co., Ltd.) at a light source irradiation angle of 60°. A method for measuring the gloss (Gs 60°) according to one embodiment of the present invention is described in detail below.

According to one embodiment of the present invention, when the lead tab 10 has a gloss of 60 to 100 (Gs 60°), the bonding strength between the metal layer 120 of the lead tab 10 and the sealing tape 20 is improved, so that defects such as corrosion or peeling due to stimulation inside and outside the battery may not occur in an actual use environment.

On the other hand, when the lead tab 10 has a gloss of less than 60 (Gs 60°), the surface of the metal layer 120 of the lead tab 10 becomes very rough, so that the bonding strength between the metal layer 120 of the lead tab 10 and the sealing tape 20 is reduced, and thus defects such as corrosion or peeling may occur due to stimulation inside and outside the battery in an actual use environment.

In addition, when the lead tab 10 has a gloss exceeding 100 (Gs 60°), the surface of the metal layer 120 of the lead tab 10 becomes very smooth, and thus the adhesion between the metal layer 120 of the lead tab 10 and the sealing tape 20 is likely to be uneven. As a result, defects such as corrosion or peeling may occur due to stimulation inside and outside the battery in an actual use environment.

According to one embodiment of the present invention, the lead tab 10 can have a water contact angle of 60 to 80°. The water contact angle according to one embodiment of the present invention is measured using a contact angle measuring device (Phoenix-MT product of SIO Corporation). A method for measuring the water contact angle according to one embodiment of the present invention is described in detail below.

According to one embodiment of the present invention, when the lead tab 10 has a water contact angle of 60 to 80°, the bonding strength between the metal layer 120 of the lead tab 10 and the sealing tape 20 is improved, so that defects such as corrosion or peeling due to stimulation inside and outside the battery may not occur in an actual use environment.

On the other hand, if the lead tab 10 has a water contact angle of less than 60°, a large amount of polarity is formed on the surface of the lead tab 10, which may cause moisture adsorption and surface oxidation during storage or transportation. As a result, the bonding strength between the metal layer 120 of the lead tab 10 and the sealing tape 20 is reduced, and defects such as corrosion or peeling may occur due to stimulation inside and outside the battery in an actual use environment.

In addition, when the lead tab 10 has a water contact angle exceeding 80°, the metal layer 120 of the lead tab 10 and the sealing tape 20 are not properly adhered to each other, and a problem occurs in which the adhesion is poor. As a result, defects such as corrosion or peeling may occur due to stimulation inside and outside the battery in an actual use environment.

According to one embodiment of the present invention, the lead tab 10 can have an arithmetic mean roughness (Ra) of 0.06 to 0.15 µm, a maximum height roughness (Ry) of 0.5 to 1.0 µm, and a 10-point average roughness (Rz) of 0.4 to 0.7 µm. The arithmetic mean roughness (Ra), the maximum height roughness (Ry), and the 10-point average roughness (Rz) according to one embodiment of the present invention are each measured using a Profiler (Surfcorder ET3000 product of KOSKA Lab). A method for measuring the arithmetic mean roughness (Ra), the maximum height roughness (Ry), and the 10-point average roughness (Rz) according to one embodiment of the present invention is described in detail below.

The definitions of arithmetic mean roughness (Ra), maximum height roughness (Ry), and 10-point average roughness (Rz) are as follows.

Arithmetic mean roughness (Ra): Arithmetic mean of the upper/lower absolute values based on the central height value of the entire measurement section

Maximum height roughness (Ry): The distance between the highest peak and the deepest valley among the five cut-off intervals.

10-point average roughness (Rz): The average of the heights of the five highest peaks and the depths of the five deepest valleys within a single cut-off length of the surface profile.

According to one embodiment of the present invention, when the lead tab 10 has an arithmetic mean roughness (Ra) of 0.06 to 0.15 µm, a maximum height roughness (Ry) of 0.5 to 1.0 µm, and a 10-point average roughness (Rz) of 0.4 to 0.7 µm, the bonding strength between the metal layer 120 of the lead tab 10 and the sealing tape 20 is improved, so that defects such as corrosion or peeling due to stimulation inside and outside the battery may not occur in an actual use environment.

On the other hand, when the lead tab 10 has an arithmetic mean roughness (Ra) of less than 0.06 µm, a maximum height roughness (Ry) of less than 0.5 µm, or a 10-point average roughness (Rz) of less than 0.4 µm, the area where the metal layer 120 of the lead tab 10 adheres to the sealing tape 20 is too small. The bonding strength between the metal layer 120 of the lead tab 10 and the sealing tape 20 is reduced, and thus defects such as corrosion or peeling may occur due to stimulation inside and outside the battery in an actual use environment.

In addition, when the lead tab 10 has an arithmetic mean roughness (Ra) exceeding 0.15 µm, a maximum height roughness (Ry) exceeding 1.0 µm, or a 10-point average roughness (Rz) exceeding 0.7 µm, the surface of the metal layer 120 of the lead tab 10 becomes very rough, so that the bonding strength between the metal layer 120 of the lead tab 10 and the sealing tape 20 deteriorates, and defects such as corrosion or peeling may occur due to stimulation inside and outside the battery in an actual use environment.

According to one embodiment of the present invention, the lead tab 10 can have a surface energy of 41 dyne/cm or more. The surface energy according to one embodiment of the present invention is calculated using the Owens-Wendt geometric mean method by substituting the contact angle values measured in accordance with the embodiment of the present invention. The method of measuring the surface energy according to one embodiment of the present invention is described in detail below.

According to one embodiment of the present invention, when the lead tab 10 has a surface energy of 41 dyne/cm or more, no defects occur on the surface of the metal layer 120, so that the bonding strength between the metal layer 120 of the lead tab 10 and the sealing tape 20 is improved, and thus defects such as corrosion or peeling due to stimulation inside and outside the battery may not occur in an actual use environment.

On the other hand, if the lead tab 10 has a surface energy of less than 41 dyne/cm, the metal layer 120 of the lead tab 10 and the sealing tape 20 do not adhere properly, and a problem of poor adhesion occurs. As a result, defects such as corrosion or peeling may occur due to stimulation inside and outside the battery in an actual use environment.

Preferably, the lead tab 10 may have a surface energy of 41 to 60 dyne/cm. More preferably, the lead tab 10 may have a surface energy of 41 to 50 dyne/cm.

According to one embodiment of the present invention, the lead tab 10 may have L of 60 to 75, a of -1 or less, and b of -1 or less based on the Lab colorimetric system. The colorimetric system according to one embodiment of the present invention is a colorimetric system using L, a, and b values measured by a spectrophotometer (KONICA MINOLTA, CM-5 product) as coordinates. Based on the Lab colorimetric system, if the L value of the surface of the lead tab 10) is 100, it appears white, and if it is 0, it appears black. In addition, as the a value increases in the positive (+) direction, it becomes red, and as the a value increases in the negative (-) direction, it becomes green. As the b value increases in the positive (+) direction, it gradually becomes yellow, and as the b value increases in the negative (-) direction, it gradually becomes blue.

According to one embodiment of the present invention, when the lead tab 10 has L of 60 to 75, a of -1 or less, and b of -1 or less based on the Lab colorimetric system, the metal layer 120 disposed on the outermost surface of the lead tab 10 has a uniform surface structure, so that the bonding strength with the sealing tape 20 is improved, and thus defects such as corrosion or peeling due to stimulation inside and outside the battery may not occur in an actual use environment.

On the other hand, if the lead tab 10 is outside the range of L, a, and b of 60 to 75, -1 or less, and -1 or less, respectively, based on the Lab color system, the metal layer 120 of the lead tab 10 and the sealing tape 20 are not properly adhered, and a problem of poor adhesion occurs. As a result, defects such as corrosion or peeling may occur due to stimulation inside and outside the battery in an actual use environment.

According to one embodiment of the present invention, the metal layer 120 may have a thickness of 10 to 500 nm.

When the metal layer 120 has a thickness of less than 10 nm, the metal layer 120 may be deposited unevenly, and as a result, when forming the secondary battery 1, the sealing tape 20 disposed on the metal layer 120 may be deposited unevenly, which may cause a problem in that the electrolyte 164 inside the secondary battery 1 may leak.

In addition, when the metal layer 120 exceeds a thickness of 500 nm, the internal stress within the metal layer 120 increases, causing a problem of cracks. Based on this, the metal layer 120 according to the embodiment of the present invention needs to have a thickness of 10 to 500 nm. Preferably, the metal layer 120 can have a thickness of 10 to 200 nm.

Below, a method for manufacturing a lead tab 10 according to one embodiment of the present invention is specifically described.

First, prepare a metal substrate 110.

The metal substrate 110 may have a thickness of 100 to 1,000 µm, and although the material is not particularly limited, it may be formed of aluminum or copper. According to one embodiment of the present invention, the metal substrate 110 may be aluminum.

Next, a metal layer 120 can be formed on the metal substrate 110 through a sputtering process using a DC sputtering device. The metal layer 120 can have a thickness of 10 to 500 nm.

At this time, chromium Cr metal is used as the sputtering target.

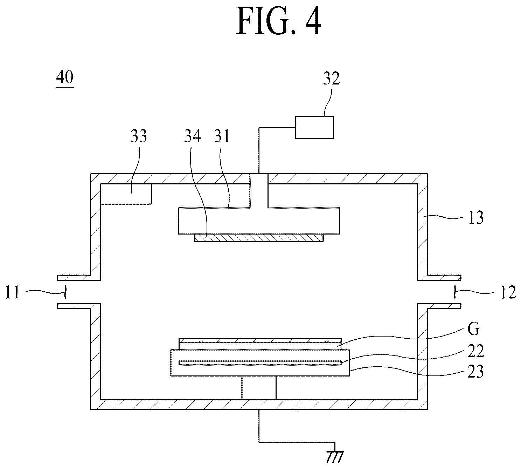

Figure 4 is a conceptual diagram schematically illustrating a part of a sputtering device 40.

According to one embodiment of the present invention, a metal layer 120 is formed on a metal substrate 110 through a process using the sputtering device 40.

According to one embodiment of the present invention, a sputtering device 40 may be provided with a chamber 13. A gas injection unit 11 may be disposed on one side of the chamber 13, and a gas discharge unit 12 may be disposed on the other side of the chamber 13.

In this regard, FIG. 4 illustrates a case where a gas injection unit 11 is disposed on the left side of the chamber 13 and a gas discharge unit 12 is disposed on the right side of the chamber 13, but one embodiment of the present invention is not limited thereto, and both the gas injection unit 11 and the gas discharge unit 12 may be disposed on the lower side of the chamber 13.

The gas injection unit 11 provides a path for sputtering gas to be injected from the outside of the chamber 13 into the inside of the chamber 13. Here, the sputtering gas corresponds to the gas, and specifically means a gas used for generating plasma used in the sputtering process. The sputtering gas is injected into the inside of the chamber 13 through the gas injection unit 11, and can be ionized by a voltage applied inside the chamber 13 to become a plasma state in which electrons, ions (for example, Ar+ ions), and neutral gas are mixed. In one embodiment, the sputtering gas may be a gas mixed with argon gas and nitrogen gas, or may be oxygen or nitrogen dioxide (NO₂).

Although not shown in Fig. 4, the gas injection unit 11 may be connected to a gas flow rate control device (not shown), a gas storage device (not shown), etc., disposed outside the chamber 13. The gas stored in the gas storage device may be injected into the chamber 13 through the gas injection unit 11 in an amount controlled by the gas flow rate control device.

The gas discharge unit 12 serves to pump air inside the chamber 13 to the outside in order to maintain the inside of the chamber 13 in a vacuum state. Although not shown in Fig. 4, the gas discharge unit 12 is connected to a vacuum pump (not shown) to control the amount of air exhausted from the inside of the chamber 13 to the outside.

Inside the chamber 13, a substrate support 23, a substrate G on the substrate support 23, a heating member 22, a target 34, a target support 31, and a control unit 33 are disposed.

The substrate support 23 is disposed at the lower part of the chamber 13 and serves to secure the substrate G introduced into the chamber 13. In addition, a heating member 22 may be further disposed inside the substrate support 23 to heat the substrate G secured on the substrate support 23 to a predetermined temperature. This heating member 22 applies a predetermined amount of heat to the substrate G secured on the substrate support 23 to enhance the reactivity with the deposition material deposited on the upper part of the substrate G.

According to one embodiment of the present invention, the substrate G on the substrate support 23 is a metal substrate 110.

A target 34 made of a deposition material to be deposited on the upper surface of the substrate G is disposed on the upper portion of the substrate support 23, and the target 34 is fixed to the upper inner wall of the chamber 13 by the target support 31. A power supply 32 for applying voltage to the target 34 is connected to one side of the target 34, and the substrate support 31 is grounded. In addition, a magnet (not shown) may be further provided on the rear surface of the target 34, and this magnet serves to confine electrons formed in the chamber 13 near the target 34.

When a negative charge is applied to the target 34, it reacts with the sputtering gas, such as argon Ar, injected into the chamber 13, ionizing the sputtering gas, and the ionized sputtering gas collides with the target 34. Here, the sputtering gas ionized by the magnet provided on the rear surface of the target 34 continuously collides with the target 34, and the deposition material separated from the target 34 thereby accelerates toward the substrate G and is deposited on the upper surface of the substrate G.

Next, the vaporized deposition material sprayed inside the chamber 13 moves toward the substrate G, so that a uniform metal layer 120 is deposited on the substrate G.

According to one embodiment of the present invention, the target 34 disposed on the target support 31 is chromium Cr.

A control unit 33 is disposed on the upper left side of the chamber 13. The pretreatment current, pretreatment pressure, pretreatment power, and film formation pressure are controlled by the control unit 33.

The sputtering voltage according to the embodiment of the present invention refers to the voltage at the power supply unit 32.

Hereinafter, the present invention will be specifically described through examples and comparative examples. However, the following examples are only intended to help understanding the present invention, and the scope of the present invention is not limited to these examples.

### Example 1

After preparing a metal substrate made of aluminum, a lead tab having a thickness of 300 µm was manufactured by forming a metal layer with a thickness of 20 nm on the metal substrate using a sputtering process. Chromium Cr metal was used as the target during the sputtering process, and the sputtering voltages are shown in Table 1 below.

### Example 2

A lead tab was manufactured using the same method as Example 1, except for the conditions of the sputtering voltage for forming the metal layer.

### Example 3

A lead tab was manufactured using the same method as Example 1, except for the conditions of the sputtering voltage for forming the metal layer.

### Example 4

A lead tab was manufactured using the same method as Example 1, except for the conditions of the sputtering voltage for forming the metal layer.

### Example 5

A lead tab was manufactured using the same method as Example 1, except for the conditions of the sputtering voltage for forming the metal layer.

### Comparative Example 1

A lead tab having a thickness of 300 µm was manufactured using the same method as in Example 1, except for the formation of a 20 nm-thick protective layer, which was formed by immersing the aluminum metal substrate in a 0.06 M chromate solution at room temperature for 20 seconds, drying it at room temperature for 10 seconds, rinsing with distilled water for 10 seconds, immersing again in the 0.06 M chromate solution at room temperature for 10 seconds, drying again at room temperature for 10 seconds, rinsing with distilled water for 10 seconds, and then drying for 15 seconds.

### Comparative Example 2

A lead tab was manufactured using the same method as in Comparative Example 1, except for the formation of a 20 nm-thick protective layer, which was formed by immersing the metal substrate in a 0.06 M chromate solution at room temperature for 15 seconds, drying it at room temperature for 10 seconds, rinsing with distilled water for 10 seconds, immersing again in the 0.06 M chromate solution at room temperature for 10 seconds, drying at room temperature for 10 seconds, rinsing with distilled water for 10 seconds, and then drying for 15 seconds.

### Comparative Example 3

A lead tab was manufactured using the same method as in Comparative Example 1, except for the formation of a 20 nm-thick protective layer, which was formed by immersing the metal substrate in a 0.06 M chromate solution at room temperature for 20 seconds, drying it at room temperature for 15 seconds, rinsing with distilled water for 10 seconds, immersing again in the 0.06 M chromate solution at room temperature for 10 seconds, drying at room temperature for 10 seconds, rinsing with distilled water for 10 seconds, and then drying for 15 seconds.

### Comparative Example 4

A lead tab was manufactured using the same method as in Comparative Example 1, except for the formation of a 20 nm-thick protective layer, which was formed by immersing the metal substrate in a 0.06 M chromate solution at room temperature for 20 seconds, drying it at room temperature for 10 seconds, rinsing with distilled water for 10 seconds, immersing again in the 0.06 M chromate solution at room temperature for 20 seconds, drying at room temperature for 10 seconds, rinsing with distilled water for 10 seconds, and then drying for 15 seconds.

### Comparative Example 5

A lead tab was manufactured using the same method as in Comparative Example 1, except for the formation of a 20 nm-thick protective layer, which was formed by immersing the metal substrate in a 0.06 M chromate solution at room temperature for 20 seconds, drying it at room temperature for 10 seconds, rinsing with distilled water for 10 seconds, immersing again in the 0.06 M chromate solution at room temperature for 10 seconds, drying at room temperature for 5 seconds, rinsing with distilled water for 10 seconds, and then drying for 15 seconds.

The gloss, water contact angle, and roughness (Ra, Ry, Rz) of the lead tabs depending on whether the metal layer was formed by the sputtering process in the above Examples 1 to 5 and Comparative Examples 1 to 5 are as shown in Table 1 below. In addition, the surface energy and chromaticity values of the lead tabs depending on whether the metal layer was formed by the sputtering process in the above Examples 1 to 5 and Comparative Examples 1 to 5 are as shown in Table 2 below.

**[Table 1]**

| | Whether the metal layer is formed by a sputtering process | Sputtering voltage V | gloss Gs 60° | water contact angle ° | Ra µm | Ry µm | Rz µm |
|---|---|---|---|---|---|---|---|
| Example 1 | O | 364 | 99.6 | 64.80 | 0.09 | 0.68 | 0.48 |
| Example 2 | O | 365 | 92.9 | 73.46 | 0.08 | 0.63 | 0.47 |
| Example 3 | O | 361 | 93.6 | 74.38 | 0.06 | 0.69 | 0.53 |
| Example 4 | O | 359 | 89.5 | 65.47 | 0.09 | 0.65 | 0.60 |
| Example 5 | O | 363 | 88.1 | 68.00 | 0.10 | 0.95 | 0.68 |
| Comparative Example 1 | X | - | 175.4 | 81.38 | 0.04 | 0.35 | 0.28 |
| Comparative Example 2 | X | - | 171.7 | 79.98 | 0.04 | 0.36 | 0.29 |
| Comparative Example 3 | X | - | 170.9 | 80.99 | 0.03 | 0.32 | 0.29 |
| Comparative Example 4 | X | - | 121.5 | 79.48 | 0.05 | 0.36 | 0.27 |
| Comparative Example 5 | X | - | 105.6 | 79.49 | 0.05 | 0.35 | 0.35 |

**[Table 2]**

| | surface energy (dyne/cm) | L | a | b |
|---|---|---|---|---|
| Example 1 | 48.71 | 62.92 | -2.35 | -4.09 |
| Example 2 | 44.91 | 62.44 | -2.42 | -4.01 |
| Example 3 | 43.04 | 61.73 | -2.35 | -4.28 |
| Example 4 | 47.88 | 63.01 | -2.44 | -4.10 |
| Example 5 | 47.11 | 65.55 | -2.40 | -4.30 |
| Comparative Example 1 | 40.06 | 80.22 | 0.75 | 6.31 |
| Comparative Example 2 | 40.29 | 80.25 | 0.74 | 6.2 |
| Comparative Example 3 | 40.30 | 80.07 | 0.75 | 6.27 |
| Comparative Example 4 | 40.70 | 80.18 | 0.75 | 6.26 |
| Comparative Example 5 | 40.96 | 80.20 | 0.77 | 6.25 |

### i) Gloss measurement

For the surfaces of the lead tab 10 samples prepared in Examples 1 to 5 and Comparative Examples 1 to 5, gloss measurements were performed using a Gloss Meter (model VG8000 by Nippon Denshoku) at a light incidence angle of 60°, with the surface to be measured facing downward and aligned with the slit. Specifically, gloss was measured on the surface of the metal layer 120 of the lead tab 10 samples.

At this time, the lead tab samples are cut to a size of 100 mm x 100 mm (width: 100 mm, length: 100 mm) from the lead tabs manufactured in Examples 1 to 5 and Comparative Examples 1 to 5, and formed to a thickness of 300 µm.

### ii) Measurement of water contact angle

For the surfaces of the lead tab 10 samples prepared in Examples 1 to 5 and Comparative Examples 1 to 5, contact angle measurements were conducted using a contact angle meter (Phoenix-MT, manufactured by SEO). The surface to be measured was positioned facing upward and fixed on the stage during measurement. Specifically, the water contact angle was measured on the surface of the metal layer 120 of the lead tab 10 samples.

The specific conditions are as follows.
Temperature: 25°C
Humidity: 50RH%
Drop volume: 0.8 µℓ

### iii) Surface energy measurement

The surface energy was calculated by substituting the numerical value of the water contact angle according to the Owens-Wendt-geometric mean method.

### iv) Measurement of roughness (Ra, Ry, Rz)

For the surfaces of the lead tab 10 samples prepared in Examples 1 to 5 and Comparative Examples 1 to 5, roughness (Ra, Ry, Rz) were measured using a profiler (Surfcorder ET3000, manufactured by KOSKA Lab). The surface to be measured was positioned facing upward and fixed on the stage during measurement. Specifically, the surface roughness (Ra, Ry, Rz) was measured on the surface of the metal layer 120 of the lead tab 10 samples.

The specific conditions are as follows.
Measurement length: 0.8 mm
Measurement speed: 0.1 mm/s

### v) Chromaticity value measurement

For the surfaces of the lead tab 10 samples prepared in Examples 1 to 5 and Comparative Examples 1 to 5, measurements were performed using a spectrophotometer (CM-5, manufactured by KONICA MINOLTA), with the surface to be measured facing downward and aligned with the slit. Specifically, the chromaticity values were measured on the surface of the metal layer 120 of the lead tab 10 samples.

The specific conditions are as follows.
Light source: xenon lamp (D65)
Angle of view: 10 degrees
Wavelength range: 360 to 740 nm
Wavelength interval: 10nm
Reference: air
Referring to Table 1, the following results can be confirmed.

In the case of the lead tabs of Examples 1 to 5 in which a metal layer was formed on a metal substrate by a sputtering process, it can be seen that the desired properties were obtained.

On the other hand, it can be seen that the lead tabs of Comparative Examples 1 to 5, in which a protective layer was formed on a metal substrate through chromate treatment without forming a metal layer by a sputtering process, did not obtain the desired physical properties.

In addition to the effects mentioned above, other features and advantages of the present invention are described below or may be clearly understood by those skilled in the art to which the present invention pertains from such description and explanation.

According to the present invention, a lead tab with improved adhesion can be provided.

It will be apparent to those skilled in the art that the present disclosure described above is not limited by the above-described embodiments and the accompanying drawings and that various substitutions, modifications and variations can be made in the present disclosure without departing from the scope of the disclosures. Consequently, the scope of the present disclosure is defined by the accompanying claims and it is intended that all variations or modifications derived from the meaning, scope and equivalent concept of the claims fall within the scope of the present disclosure.

## Claims

1. A lead tab (10) comprising:
a metal substrate (110) including aluminum; and
a metal layer (120) disposed on both sides of the metal substrate (110);
wherein the metal layer (120) comprises 70 to 99.9 wt% of chromium and
wherein the lead tab (10) has a gloss of 60 to 100 (Gs 60°) and a water contact angle of 60 to 80°.

2. The lead tab of claim 1, wherein the lead tab (10) has an arithmetic mean roughness (Ra) of 0.06 to 0.15 µm, a maximum height roughness (Ry) of 0.5 to 1.0 µm, and a 10-point average roughness (Rz) of 0.4 to 0.7 µm.

3. The lead tab of claim 1 or 2, wherein the lead tab (10) has a surface energy of 41 dyne/cm or more.

4. The lead tab of claim 1, 2 or 3, wherein the lead tab (10) has L of 60 to 75, a of -1 or less, and b of -1 or less based on a Lab colorimetric system.

5. The lead tab of any one of the preceding claims, wherein the metal substrate (110) has a thickness of 100 to 1,000 µm.

6. The lead tab of any one of the preceding claims, wherein the metal layer (120) has a thickness of 10 to 500 nm.

7. The lead tab of any one of the preceding claims, wherein the metal layer (120) is formed by a dry vacuum process.

8. The lead tab of claim 7, wherein the dry vacuum process comprises at least one of a sputtering process, an evaporation process, an ion plating process, and a CVD process.

9. A secondary battery (1) comprising the lead tab (10) of any one of the preceding claims 1-8.
